# EUROPEAN PATENT SPECIFICATION

(11) **EP 1 733 608 B1**
(45) Date of publication and mention of the grant of the patent: **05.03.2008**
(21) Application number: 06115132.0
(22) Date of filing: 08.06.2006
(51) Int. Cl.: A01D 69/06, F16D 1/08

(54) **Final drive for an agricultural vehicle**
Endantrieb für ein Landwirtschaftsfahrzeug
Entraînement final de roue pour véhicule agricole

(30) Priority: 15.06.2005 GB 0512079
(43) Date of publication of application: 20.12.2006
(73) Proprietor: CNH Belgium N.V., 8210 Zedelgem (BE)
(72) Inventor: Vandendriessche, Jean-Pierre, 9420, Erpe-Mere (BE); De Lathauwer, Tom, 9340, Lede (BE); Bonte, Xavier, 4515 RZ, Ijzendijke (NL)
(74) Representative: CNH IP Department

(56) References cited:
- GB-A- 351 648
- US-A- 4 003 444
- US-A- 5 911 286

## Description

### Field of the invention

The present invention relates to a final drive and is particularly applicable to a final drive for an agricultural vehicle, such as a combine harvester.

### Background of the invention

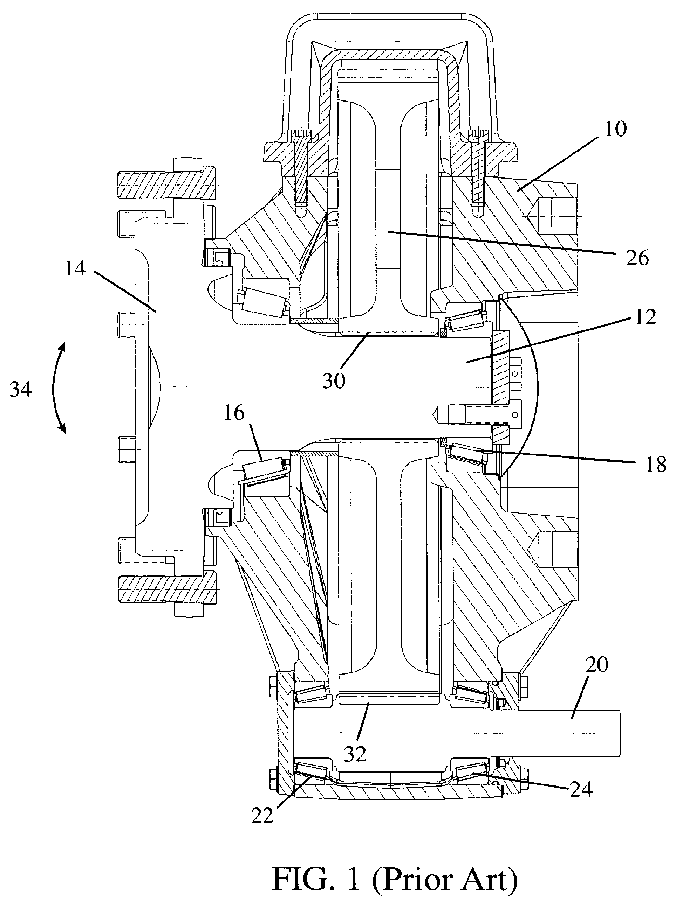

The final drive of a combine harvester is a gearbox that not only transmits driving torque to the wheels but also supports the weight of the harvester. A final drive capable of meeting these demands, is shown in Figure 1, this being a typical final drive in current production. Such a typical final drive is also described in US 4,003,444.

Such a final drive comprises a casing within which a wheel shaft is rotatably supported. An input shaft, which is likewise supported in the casing, drives the wheel shaft through teeth. The weight of the harvester applies a wheel load induced bending moment to the wheel shaft, causing its axis to move out of parallel alignment with the axis of the input shaft. Such misalignment accelerates the wear of the gearing which couples the two shafts for rotation with one another. This problem is rendered more difficult to resolve by the fact that the wheel load induced bending moment which causes this misalignment is not constant but is affected by such factors as the weight of the harvested crop in the grain tank, the type of tyre fitted to the wheel and the field conditions.

GB 351,648 describes a power transmission gearing where irregularities of alignment may occur between the driving shaft of the motor and the gear mechanism. Misalignment between the driving shaft and the gear mechanism will make it difficult to obtain a satisfactory coupling between the two shafts and accelerates wear to the teeth of the coupling shafts. This accelerated wear is prevented by providing the driving shaft with outwardly extending longitudinally curved teeth. These teeth are adapted to engage cooperating inwardly extending teeth formed in a bore in a pinion of the speed mechanism. This will allow the relative directions of the axes of the driving shaft of the motor and shaft of the gear mechanism to be varied by a small angle.

However, GB 351,648 does not solve the problem of wear due to misalignment of shafts which are parallel, but laterally spaced from each other.

US-A-5,911,286 relates to halfshaft assemblies for transmitting torque to the wheels of a vehicle utilizing swing-axle type independent rear suspensions. Each wheel is allowed to travel independently of the other wheel through the use of a splined crown joint at the wheel, a cardan joint at the transmission output and an independent swing axle suspension including control arms.

Although this application describes the use of splined crown joints at the wheels, they are intended to permit relative angular motion between the axle shaft and drive sleeve and allow the wheel to jounce and rebound. They are not intended to reduce wear.

Due to the laterally offset and the construction of the final drive of an agricultural vehicle, the wear to the meshing teeth of the final drive due to the wheel load induced bending moment will be located remote from where the actual misalignment occurs. The misalignment occurs between the teeth of the wheel shaft and the bull gear, while the meshing teeth between the bull gear and the input shaft are subjected to increased wear. Implementing the solution as proposed in GB 351,648 or US-A-5,911,286 and providing curved teeth to the coupling were the actual wear is, thus between the meshing teeth of the bull gear and the input shaft, is not feasible since only two or three teeth mesh and transfer the necessary drive from the input shaft to the bull gear. When these teeth would be replaced by teeth sufficiently curved to take up the misalignment of the bull gear, the contact surface between the meshing teeth would be too small to adequately transfer the drive to the bull gear.

### Object of the invention

The present invention seeks therefore to provide a final drive suitable for an agricultural vehicle which is less prone to wear through gear misalignment, where the wear occurs at a different location then the misalignment of the gears.

### Summary of the invention

According to the present invention, there is provided a final drive for an agricultural vehicle having a casing, a wheel shaft supported in the casing by means of two support bearings spaced from one another along the length of the wheel shaft, an input shaft rotatably supported in the casing with its axis parallel to but laterally offset from that of the wheel shaft, and a bull gear connected to the wheel shaft by means of a splined coupling disposed between the support bearings of the wheel shaft and having external teeth meshing with teeth on the input shaft to transmit torque to the wheel shaft from the input shaft, characterised in that the splined coupling between the bull gear and the wheel shaft is spherical.

It is usual to refer to a curved splined coupling as being "spherical" but this term should not be understood in a literal sense, in other words the splines do not need to have a common centre of curvature. The splines need only to be curved or crowned in the axial plane of the wheel shaft, to allow the wheel shaft to rotate about an axis that is not parallel to the rotational axis of the bull gear without increasing the stress on the teeth. In this way, the wheel shaft can rotate about an axis due to the wheel load induced bending moment, while no force is applied to cause the axis of rotation of the bull gear to move out of alignment with that of the input shaft. The teeth on the bull gear coupling it for rotation with the input shaft are thus not subjected to increased wear.

Preferably, the splines on the wheel shaft are convex away from the axis of rotation of the wheel shaft, that is to say the splined region of the wheel shaft in engagement with the splines of the bull gear is barrelled instead of being cylindrical.

It is alternatively, or additionally, possible for the inner splines on the bull gear to be convex towards the axis of rotation of the wheel shaft.

### Brief description of the drawings

The invention will now be described further, by way of example, with reference to the accompanying drawings, in which:
Figure 1 is a section of a prior art final drive, and
Figure 2 is a section similar to that of Figure 1 showing a final drive of the present invention.

### Detailed description of the preferred embodiment

The final drive in Figure 1 comprises a casing 10 within which a wheel shaft 12 connected to a wheel flange 14 is rotatably supported by means of a pair of conical roller bearings 16 and 18, serving as both radial and axial thrust bearings. An input shaft 20, which is likewise supported in the casing 10 by means of a pair of conical roller bearings 22 and 24, drives the wheel shaft 12 through teeth which mesh with teeth 32 on a bull gear 26. The bull gear 26 could in principle be formed integrally with the wheel shaft 12 but, as this would be difficult to manufacture, it is instead formed separately and coupled for rotation with the wheel shaft 12 by means of straight splines 30.

The weight of the harvester acting on the wheel flange 14 applies a wheel load induced bending moment to the wheel shaft 12 tending to turn it in the direction of the arrow 34, causing its axis to move out of parallel alignment with the axis of the input shaft 20. Such misalignment accelerates the wear of the gearing which couples the two shafts 20 and 12 for rotation with one another, that is to say the teeth 32 coupling the bull gear 26 for rotation with the input shaft 20.

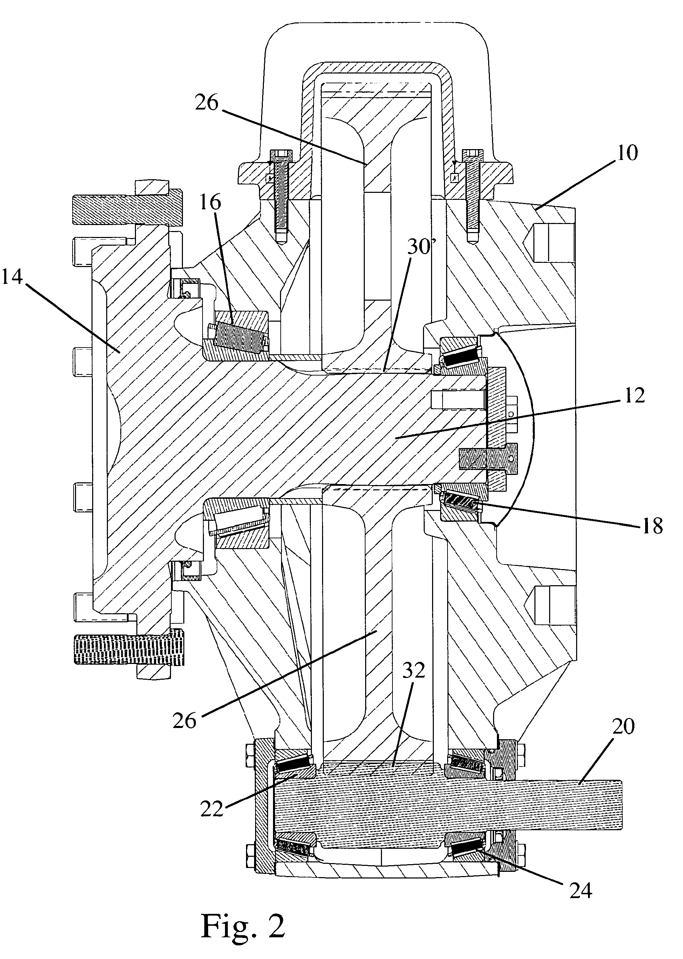

The final drive of the invention shown in Figure 2 is generally similar to that of Figure 1 and, to avoid unnecessary repetition, components which are the same as those previously described have been allocated the same reference numerals and will not the described again.

The embodiment of the invention shown in Figure 2 differs from the prior art final drive shown in Figure 1 in that the splined coupling 30' between the wheel shaft 12 and the bull gear 26 is spherical. The splines on the wheel shaft 12 are slightly curved to be convex outward. As a result, the splined section of the wheel shaft 12, instead of being cylindrical as in the prior art, is barrelled. While this tends to reduce the overlap area between the splines on the bull gear 26 and the splines on the wheel shaft 12, this reduction in contact area does not affect the life of the splined coupling 30'. The curvature of the splines does however permit the axis of the wheel shaft 12 to move out of alignment with the axis of the bull gear 26 without placing additional stress on the gear mesh 32.

In the case of the prior art final drive in Figure 1, the straight splines 30 have the tendency to turn the axis of rotation of the bull gear 26 so that it ceases to be parallel to the axis of the input shaft 20. When this occurs, additional wear occurs at the meshing teeth 32. In the present invention, the ability of the axis of the wheel shaft 12 to turn relative to the axis of the bull gear 26 results in the bull gear always rotating about an axis parallel to that of the input shaft 20.

Instead of, or in addition to, providing the wheel shaft 12 with outwards convex splines, it is possible to form the inner splines on the bull gear 26 to that they are convex towards the axis of rotation of the wheel shaft. It is not important which of the two sets of splines in made convex, as long as the axis of the wheel shaft can move out of alignment with that of the bull gear 26.

It can thus be seen from the foregoing description that by a simple modification the invention allows the life of a final drive to be increased without otherwise affecting its performance.

## Claims

1. A final drive for an agricultural vehicle having a casing (10), a wheel shaft (12) supported in the casing by means of two support bearings (16,18) spaced from one another along the length of the wheel shaft (12), an input shaft (20) rotatably supported in the casing (10) with its axis parallel to but laterally offset from that of the wheel shaft (12), and a bull gear (26) connected to the wheel shaft (12) by means of a splined coupling (30) disposed between the support bearings (16,18) of the wheel shaft and having external teeth (32) meshing with teeth on the input shaft (20) to transmit torque to the wheel shaft (12) from the input shaft (20), **characterised in that** the splined coupling between the bull gear (26) and the wheel shaft (12) is spherical.

2. A final drive as claimed in claim 1, wherein the splines (30') on the wheel shaft (12) are convex away from the axis of rotation of the wheel shaft (12).

3. A final drive as claimed in claim 1 or 2, wherein the inner splines on the bull gear (26) are convex towards the axis of rotation of the wheel shaft (12).

## Patentansprüche

1. Endantrieb für ein landwirtschaftliches Fahrzeug, mit einem Gehäuse (10), einer Rad-Welle (12), die in dem Gehäuse mit Hilfe von zwei Traglagern (16, 18) gelagert ist, die mit Abstand voneinander entlang der Länge der Rad-Welle (12) angeordnet sind, einer Eingangswelle (20), die drehbar in dem Gehäuse (10) mit ihrer Achse parallel zu der Achse der Rad-Welle (12), jedoch seitlich versetzt gegenüber dieser angeordnet ist, und mit einem Vorgelege-Zahnrad (26), das mit der Rad-Welle (12) mit Hilfe einer keilverzahnte Kupplung (30) verbunden ist, die zwischen den Traglagern (16, 18) der Rad-Welle angeordnet ist, und das außenliegende Zähne (32) aufweist, die mit Zähnen auf der Eingangswelle (20) kämmen, um ein Drehmoment von der Eingangswelle (20) auf die Rad-Welle (12) zu übertragen, **dadurch gekennzeichnet, dass** die keilverzahnte Kupplung zwischen dem Vorgelege-Zahnrad (26) und der Rad-Welle (12) kugelförmig ist.

2. Endantrieb nach Anspruch 1, bei dem die Keilverzahnungen (30') auf der Rad-Welle (12) in einer Richtung von der Drehachse der Rad-Welle (12) fort konvex sind.

3. Endantrieb nach Anspruch 1 oder 2, bei dem die innenliegenden Keilverzahnungen des Vorgelege-Zahnrades (26) in Richtung auf die Drehachse der Rad-Welle (12) konvex sind.

## Revendications

1. Transmission d'essieu pour un véhicule agricole doté d'un logement (10), d'un essieu (12) supporté dans le logement au moyen de deux paliers d'appui (16, 18) espacés l'un de l'autre sur la longueur de l'essieu (12), d'un arbre primaire (20) supporté dans le logement (10) de manière à tourner, son axe étant parallèle à celui de l'essieu (12) mais décalé latéralement par rapport à ce dernier, et d'un réducteur (26) relié à l'essieu (12) au moyen d'un accouplement cannelé (30) disposé entre les paliers d'appui (16, 18) de l'essieu et doté de dents externes (32) qui s'engrènent avec les dents de l'arbre primaire (20) pour transmettre le couple à l'essieu (12) à partir de l'arbre primaire (20), **caractérisée en ce que** l'accouplement cannelé entre le réducteur (26) et l'essieu (12) est sphérique.

2. Transmission d'essieu suivant la revendication 1, dans laquelle les cannelures (30') de l'essieu (12) sont convexes et s'éloignent de l'axe de rotation de l'essieu (12).

3. Transmission d'essieu suivant la revendication 1 ou 2, dans laquelle les cannelures intérieures du réducteur (26) sont convexes vers l'axe de rotation de l'essieu (12).
